# EUROPEAN PATENT SPECIFICATION

(11) **EP 3 989 403 B1**
(45) Date of publication and mention of the grant of the patent: **20.12.2023**
(21) Application number: 20870925.3
(22) Date of filing: 03.06.2020
(51) Int. Cl.: H02K 1/27, H02K 21/14, H02K 1/276

(54) **ROTOR CORE LAMINATION, ROTOR CORE, ROTOR, PERMANENT MAGNET SYNCHRONOUS ELECTRIC MOTOR, AND RELATED PRODUCT**
ROTORBLECH, ROTORKERN, ROTOR, PERMANENTMAGNET-SYNCHRON-ELEKTROMOTOR UND ENTSPRECHENDES PRODUKT
TÔLE DE NOYAU DE ROTOR, NOYAU DE ROTOR, ROTOR, MOTEUR ÉLECTRIQUE SYNCHRONE À AIMANT PERMANENT ET PRODUIT ASSOCIÉ

(30) Priority: 30.09.2019 CN 201910945828
(43) Date of publication of application: 27.04.2022
(73) Proprietor: Huawei Digital Power Technologies Co., Ltd., Shenzhen, Guangdong 518043 (CN)
(72) Inventor: LI, Yi, Shenzhen, Guangdong 518129 (CN); EERHEMU, Bayaer, Shenzhen, Guangdong 518129 (CN); LI, Mengde, Shenzhen, Guangdong 518129 (CN)
(74) Representative: Maiwald GmbH
(86) International application number: PCT/CN2020/094225
(87) International publication number: WO 2021/063014

(56) References cited:
- CN-A- 106 300 735
- CN-A- 107 437 856
- CN-A- 107 437 856
- CN-A- 108 711 977
- CN-A- 110 752 685
- US-A1- 2011 163 624
- US-A1- 2018 241 262
- US-A1- 2019 089 212
- US-A1- 2019 089 214
- US-A1- 2019 238 014
- US-B2- 10 361 599

## Description

### TECHNICAL FIELD

This application relates to the field of electric vehicle technologies, and in particular, to a rotor core lamination, a rotor core, a rotor, a permanent magnet synchronous motor, a powertrain, and an electric vehicle.

### BACKGROUND

A built-in permanent magnet synchronous motor is widely applied in a powertrain system in an electric vehicle. A rotor of the built-in permanent magnet synchronous motor includes a rotor core and a permanent magnet. The rotor core is provided with a magnetic slot. The permanent magnet is disposed in the magnetic slot.

A motor torque of the permanent magnet synchronous motor is equal to a sum of a permanent magnet torque and a reluctance torque. A conventional built-in permanent magnet synchronous motor has a limited saliency ratio. Consequently, the motor has relatively low utilization for the reluctance torque. A ratio of the permanent magnet torque needs to be improved, to implement a specified motor torque to meet a requirement. This leads to a relatively large permanent magnet quantity and increases the costs.

US 2018/0241262 A1 describes an electric machine rotor.

US 2019/0238014 A1 describes an electric machine comprising a rotor and a stator.

US 2019/0089212 A1 describes a rotor with nonmagnetic insert.

### SUMMARY

This application provides a rotor core lamination, a rotor core, a rotor, a permanent magnet synchronous motor, a powertrain, and an electric vehicle, to reduce a permanent magnet quantity, thereby reducing the costs.

The present invention is a rotor core lamination as defined in the independent claim 1. Further embodiments of the invention are defined in the dependent claims 2 - 11.

In the solutions of this application, the rotor core lamination is a unit forming a rotor core. The rotor core lamination is cylindrical. The axial surface of the rotor core lamination is provided with a plurality of first outer magnetic slots, a plurality of second outer magnetic slots, a plurality of first inner magnetic slots, and a plurality of second inner magnetic slots. All the magnetic slots pass through two opposite ends of the rotor core lamination along an axis of the rotor core lamination. One first outer magnetic slot, one second outer magnetic slot, one first inner magnetic slot, and one second inner magnetic slot form one magnetic slot unit. In one magnetic slot unit, the first outer magnetic slot, the second outer magnetic slot, the first inner magnetic slot, and the second inner magnetic slot are spaced from each other. The four slots each are spaced from a boundary of the axial surface. The first outer magnetic slot and the second outer magnetic slot form a V shape. The first inner magnetic slot and the second inner magnetic slot also form a V shape. The two V-shaped openings both face the outside of the rotor core lamination. In addition, the V shape formed by the first inner magnetic slot and the second inner magnetic slot encircle the periphery of the V shape formed by the first outer magnetic slot and the second outer magnetic slot. The first outer magnetic slot and the second outer magnetic slot are symmetrical about a radius of the rotor core lamination, and the first inner magnetic slot and the second inner magnetic slot are also symmetrical about this radius. The four slots share the same symmetry axis. A plurality of such magnetic slot units are spaced from each other and distributed in an array form around the axis of the rotor core lamination.

In the solutions of this application, the formed opening of the magnetic slot at the axial surface may reflect a cross-sectional structure of the magnetic slot. Specifically, the inner magnetic pole included angle formed between the first inner opening and the second inner opening is an angle of the V shape formed by the first inner magnetic slot and the second inner magnetic slot, and the outer magnetic pole included angle formed between the first outer opening and the second outer opening is an angle of the V shape formed by the first outer magnetic slot and the second outer magnetic slot. The first inner opening, the second inner opening, the first outer opening, and the second outer opening may all be strip-shaped. Widths of the openings may be defined. The first inner opening and the second inner opening have the same width, and the first outer opening and the second outer opening have the same width.

In a permanent magnet synchronous motor, a value of the width of the first outer opening and a value of the width of the first inner opening greatly affect magnetic reluctance of a d-axis magnetic circuit of the motor, that is, greatly affect inductance of the d-axis magnetic circuit. A value of the outer magnetic pole included angle and a value of the inner magnetic pole included angle greatly affect magnetic reluctance of a q-axis magnetic circuit of the motor, that is, greatly affect inductance of the q-axis magnetic circuit (smaller magnetic reluctance indicates larger inductance, and larger magnetic reluctance indicates smaller inductance). A saliency ratio of the motor is a ratio of the q-axis inductance to the d-axis inductance. A motor torque is a sum of a reluctance torque (an electromagnetic torque component generated due to a difference between the q-axis inductance and the d-axis inductance of the permanent magnet synchronous motor) and a permanent magnet torque (an electromagnetic torque component generated by a permanent magnet of the permanent magnet synchronous motor). A permanent magnet quantity is positively correlated to the permanent magnet torque. In this solution, value matching is performed on the width of the first outer opening and the width of the first inner opening, and the outer magnetic pole included angle and the inner magnetic pole included angle, to increase a ratio of the q-axis inductance to the d-axis inductance of the motor, thereby improving the saliency ratio. After the saliency ratio is improved, the motor has higher utilization for the reluctance torque. When the motor torque with the same magnitude is implemented, the permanent magnet torque may be relatively small, to reduce the permanent magnet quantity, thereby reducing the costs.

In an implementation, one end of the first inner opening that is close to and/or away from the second inner opening includes at least two arc segments. The at least two arc segments are tangent in sequence. An obtuse angle is formed between chords of the two adjacent arc segments. Therefore, a smooth transition occurs between the two adjacent arc segments. A sharp corner is not formed. The first inner opening has a relatively large width. An end of the first inner opening that is away from the second inner opening is relatively distant from a circle center of the axial surface. In this case, when the rotor core lamination rotates at a high speed, relatively large stress occurs at the end under the function of centrifugal force. This arc transition structure can be used to effectively reduce a curvature change at the end, so that the stress is relatively evenly distributed at the end and a stress concentration factor is relatively small, to avoid stress concentration at the end, thereby ensuring a peak rotation speed of the motor and improving power density of the motor.

In an implementation, the end of the first inner opening that is close to the second inner opening includes a first arc segment, a second arc segment, a straight line segment, a third arc segment, and a fourth arc segment that are connected in sequence. The second arc segment is tangent to the straight line segment. The straight line segment is tangent to the third arc segment. The straight line segment can be used to ensure structural strength of the rotor core lamination. The second arc segment and the third arc segment are respectively tangent to two opposite ends of the straight line segment. A smooth transition connection is formed between the first arc segment and the second arc segment. In other words, the first arc segment is tangent to the second arc segment. An obtuse angle is formed between chords of the first arc segment and the second arc segment. Similarly, a smooth transition connection is also formed between the third arc segment and the fourth arc segment. In other words, the third arc segment is tangent to the fourth arc segment. The obtuse angle is formed between the chord of the first arc segment and the chord of the second arc segment. A smooth transition between a plurality of arc segments facilitates further reduction of a curvature change at an end of the first inner opening that is close to the second inner opening, so that stress is more evenly distributed, to avoid stress concentration.

In this implementation, shape sizes and position sizes of the first arc segment, the second arc segment, the straight line segment, the third arc segment, and the fourth arc segment may be properly designed according to a product requirement. For example, an "auricle-shaped" structure may be presented at the end of the first inner opening that is close to the second inner opening. The "auricle-shaped" structure can be used to not only facilitate optimization of stress distribution, but also can be well adapted to a main structure of the rotor core lamination, thereby improving mass production of the rotor core lamination.

In an implementation, an outer pole arc angle and an inner pole arc angle may be defined at the axial surface of the rotor core lamination. The outer pole arc angle is a pole arc angle corresponding to the first outer opening and the second outer opening. The inner pole arc angle is a pole arc angle corresponding to the first inner opening and the second inner opening. The inner pole arc angle is 2 times to 2.5 times the outer pole arc angle.

A resultant magnetic potential of the magnetic pole unit is obtained by superimposing a magnetic potential (hereinafter referred to as an outer-layer magnetic potential) generated by a permanent magnet in the first outer magnetic slot and a permanent magnet in the second outer magnetic slot, and a magnetic potential (hereinafter referred to as an inner-layer magnetic potential) generated by a permanent magnet in the first inner magnetic slot and a permanent magnet in the second inner magnetic slot. The resultant magnetic potential is affected by the outer-layer magnetic potential or the inner-layer magnetic potential alone, and certainly is also affected by a superimposition result of the two potentials. Waveforms of the resultant magnetic potential, the outer-layer magnetic potential, and the inner-layer magnetic potential each include a fundamental wave and a harmonic wave. The fundamental wave and the harmonic wave of the outer-layer magnetic potential are both related to the outer magnetic pole included angle and the outer pole arc angle, and the fundamental wave and the harmonic wave of the inner-layer magnetic potential are both related to the inner magnetic pole included angle and the inner pole arc angle. In this implementation, value matching is performed on the inner magnetic pole included angle, the outer magnetic pole included angle, the inner pole arc angle, and the outer pole arc angle at the same time, to optimize the waveform of the resultant magnetic potential, effectively suppress a harmonic wave component in the waveform of the resultant magnetic potential, and improve sine of a waveform in a magnetic field of an air gap. In this way, a cogging torque and a torque ripple of the permanent magnet synchronous motor are reduced, and vibration noise of the motor is reduced. In addition, because the outer magnetic pole included angle is not equal to the inner magnetic pole included angle, more combinations may be generated when value matching is performed on the outer magnetic pole included angle and the inner magnetic pole included angle, to more flexibly optimize the waveform of the resultant magnetic potential, thereby meeting a product requirement.

In an implementation, radiuses of at least two arc segments are different. This can refine a gradient of the curvature change. The stress is more smoothly distributed, to further reduce a stress concentration factor.

The rotor core lamination has a circumferential surface. A partial region of the circumferential surface curves inward to form a concave. The concave has two opposite sides parallel to an axial direction. The concave penetrates through the axial surface at two opposite ends in the axial direction. Setting of the concave changes a shape of the circumferential surface of the rotor core lamination, to further change an air gap between a rotor and a stator. In the permanent magnet synchronous motor, a magnetic conductance waveform of the air gap is related to a width of the air gap. In this implementation, setting of the concave can partially increase the width of the air gap, to optimize the magnetic conductance waveform of the air gap and suppress a harmonic wave component in the magnetic conductance waveform of the air gap. In addition, magnetic field intensity of the rotor = magnetic potential * magnetic conductance. It may be learned that, based on the solution of optimizing the waveform of the resultant magnetic potential, in cooperation with the optimization of the magnetic conductance waveform of the air gap in this implementation, a harmonic wave component of the magnetic field intensity of the air gap can be further suppressed, and sine of the waveform of the magnetic field intensity of the air gap can be improved.

A partial region of the circumferential surface protrudes to form a protrusion. The protrusion extends to the axial surface at the two opposite ends in the axial direction. The protrusion has two opposite sides parallel to the axial direction. The concaves are symmetrically distributed on two opposite sides of the protrusion. The concave is spaced from the protrusion. Similarly, setting of the protrusion also changes the shape of the circumferential surface of the rotor core lamination and that of the rotor core, to further partially reduce the air gap, further optimize the magnetic conductance waveform of the air gap, and suppress the harmonic wave component in the magnetic conductance waveform of the air gap. In addition, the harmonic component of the magnetic field intensity of the air gap may be suppressed, to improve sine of the waveform of the magnetic field intensity of the air gap. In addition, setting of both the protrusion and the concave can more finely adjust the magnetic conductance waveform of the air gap and the waveform of the magnetic field intensity of the air gap.

In an implementation, a flux barrier is formed between two ends that are of the first outer opening and the second outer opening and that are close to each other. Setting of the flux barrier can reduce magnetic leakage, and can increase mechanical strength of the rotor core lamination, to avoid damage to the rotor core lamination due to inner stress during high-speed rotation of the rotor core lamination. The mechanical strength of the rotor core lamination is improved, so that a peak rotation speed of the motor can be no longer limited, to ensure power density of the motor.

According to a second aspect, this application provides a rotor core, including a plurality of rotor core laminations. All the rotor core laminations are stacked in an axial direction. Circumferential profiles of all the rotor core laminations are the same. In such a stacking assembly design, an eddy current loss of the rotor core can be reduced. In this application, the rotor core can be used to improve a saliency ratio of a permanent magnet synchronous motor, reduce a permanent magnet quantity, and reduce the costs.

According to a third aspect, this application provides a rotor, including a rotating shaft, a permanent magnet, and a rotor core. A permanent magnet is disposed in each of a first outer magnetic slot, a second outer magnetic slot, a first inner magnetic slot, and the second inner magnetic slot of each rotor core lamination. The rotating shaft passes through the rotor core in an axial direction of the rotor core and is fixedly connected to the rotor core. The first outer magnetic slot, the second outer magnetic slot, the first inner magnetic slot, and the second inner magnetic slot of each rotor core lamination are all distributed on the periphery of the rotating shaft. In this application, the rotor can be used to improve a saliency ratio of a permanent magnet synchronous motor, reduce a permanent magnet quantity, and reduce the costs.

According to a fourth aspect, this application provides a permanent magnet synchronous motor, including a stator and a rotor. The stator is sleeved on the periphery of a rotor core. An air gap is left between the stator and the rotor core. The rotating shaft extends out of the stator. The permanent magnet synchronous motor in this application has a relatively large saliency ratio, a small permanent magnet quantity, and low costs.

According to a fifth aspect, this application provides a powertrain, including a motor controller and a permanent magnet synchronous motor. The motor controller is electrically connected to the permanent magnet synchronous motor to control the permanent magnet synchronous motor. The powertrain in this application has good performance and low costs.

According to a sixth aspect, this application provides an electric vehicle, including a vehicle frame and a powertrain. The powertrain is disposed on the vehicle frame. The electric vehicle in this application has good performance and low costs.

### BRIEF DESCRIPTION OF DRAWINGS

To describe the technical solutions in the embodiments or the background of this application, the following briefly describes the accompanying drawings for describing the embodiments or the background of this application.
FIG. 1 is a schematic structural diagram of an electric vehicle according to an embodiment of this application;
FIG. 2 is a structural block diagram of a powertrain in the electric vehicle in FIG. 1;
FIG. 3 is a schematic structural diagram of a permanent magnet synchronous motor in the powertrain in FIG. 2;
FIG. 4 is a schematic structural diagram of a cross section of the permanent magnet synchronous motor in FIG. 3;
FIG. 5 is a schematic structural diagram of a rotor in the permanent magnet synchronous motor in FIG. 4;
FIG. 6 is a schematic structural assembly diagram of a rotor core and a permanent magnet in the rotor in FIG. 5;
FIG. 7 is a schematic structural assembly diagram of a rotor core lamination and a permanent magnet in the rotor in FIG. 5;
FIG. 8 is a schematic structural diagram of a front view of the rotor core lamination in FIG. 7;
FIG. 9 is a schematic partial structural diagram of the rotor core lamination in FIG. 8;
FIG. 10 is another schematic partial structural diagram of the rotor core lamination in FIG. 8;
FIG. 11 is another schematic partial structural diagram of the rotor core lamination in FIG. 8;
FIG. 12 is a locally enlarged schematic structural diagram of a B1 position in FIG. 10;
FIG. 13 is a locally enlarged schematic structural diagram of a B2 position in FIG. 10; and
FIG. 14 is another schematic structural diagram of the rotor core lamination according to an embodiment of the claimed invention.

### DESCRIPTION OF EMBODIMENTS

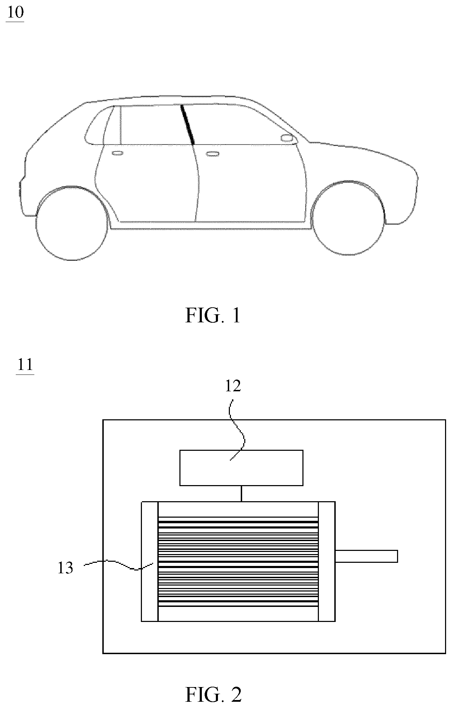

The embodiments of this application provide an electric vehicle that includes but is not limited to an electric car, an electric bus, an electric motorcycle, or the like. For example, FIG. 1 shows an electric sport utility vehicle (SUV) 10. The electric vehicle 10 may include a vehicle frame and a powertrain disposed on the vehicle frame. The vehicle frame serves as a structural framework of the electric vehicle 10, and is configured to support, fasten, and connect each assembly, to withstand loads inside a vehicle system and from an external environment. The powertrain is a system that includes a series of components and that is used to generate power and transfer the power to a road surface. As shown in FIG. 2, the powertrain 11 may include a motor controller 12 and a permanent magnet synchronous motor 13. The motor controller 12 is electrically connected to the permanent magnet synchronous motor 13, and is configured to control the permanent magnet synchronous motor 13 to operate.

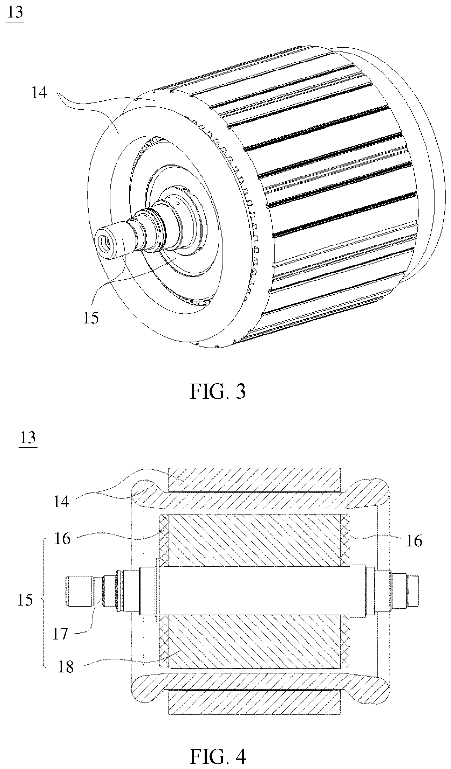

As shown in FIG. 3, FIG. 4, FIG. 5, and FIG. 6, the permanent magnet synchronous motor 13 includes a stator 14 and a rotor 15. The stator 14 may have a cylindrical inner cavity. The rotor 15 includes a rotor core 18, a permanent magnet 19, and a rotating shaft 17. The rotor core 18 may be cylindrical. The rotor core 18 has an axial surface (a surface whose normal line is in an axial direction of the rotor core 18) and a circumferential surface. The axial surface is provided with a plurality of magnetic slots. The magnetic slots may penetrate through the rotor core 18 in the axial direction. At the axial surface, each magnetic slot does not extend to an axis center (that is, is spaced from the axis center). A plurality of magnetic slots are spaced from each other and distributed in an array form around the axis center. The permanent magnet 19 configured to provide a magnetic field is disposed in each magnetic slot. The rotor core 18 is disposed in the inner cavity of the stator 14. An air gap is left between a circumferential surface of the rotor core 18 and a cavity wall of the inner cavity. A shaft hole extending in the axial direction is disposed in the rotor core 18. The rotating shaft 17 passes through the shaft hole and is fixedly connected to the rotor core 18, to rotate with the rotor core 18. The magnetic slot and the permanent magnet 19 are both distributed on the periphery of the rotating shaft 17. The rotating shaft 17 extends out of the inner cavity of the stator 14, to facilitate torque implementation. To limit and protect the rotor core 18 in which the permanent magnet 19 is disposed, end covers 16 may be disposed at two ends of the rotor core 18 in the axial direction. The rotating shaft 17 penetrates through the end covers 16.

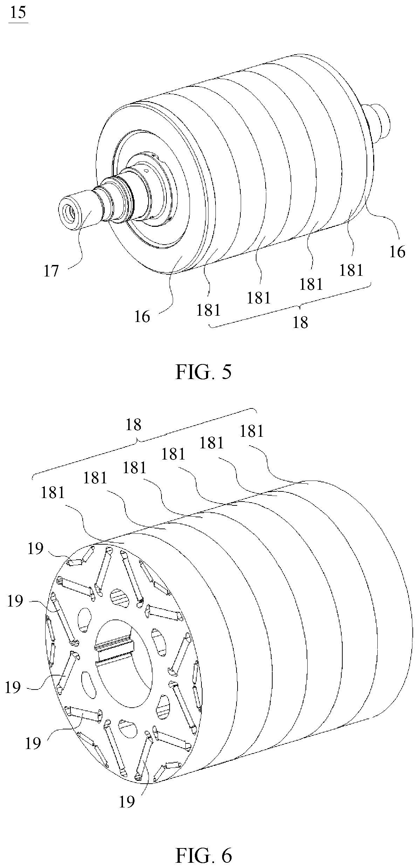

As shown in FIG. 6, in an embodiment of this application, the rotor core 18 may include a plurality of rotor core laminations 181. The rotor core laminations 181 are cylindrical. All the rotor core laminations 181 are stacked in the axial direction. Circumferential profiles of all the rotor core laminations are the same. In such a stacking assembly design, an eddy current loss of the rotor core 18 can be reduced. The rotor core lamination 181 is provided with a plurality of magnetic slots. According to a product requirement, a specified position relationship may exist between magnetic slots in the same position of the rotor core laminations 181. For example, all the magnetic slots in the same position of the rotor core laminations 181 fully overlap, or all the magnetic slots in the same position may be successively staggered. The following describes the solutions in the embodiments of this application in detail by using an example of a single rotor core lamination 181.

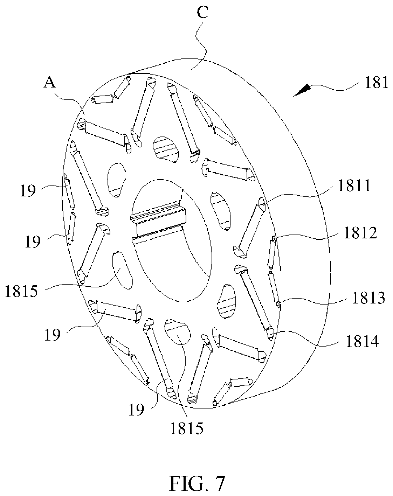

As shown in FIG. 7, in an implementation, the cylindrical rotor core lamination 181 has axial surfaces A (there are two axial surfaces A) and a circumferential surface C. The rotor core lamination 181 is provided with a plurality of first outer magnetic slots 1812, a plurality of second outer magnetic slots 1813, a plurality of first inner magnetic slots 1811, and a plurality of second inner magnetic slots 1814. All the magnetic slots penetrate through two opposite ends of the rotor core lamination 181 in the axial direction of the rotor core lamination 181. All the magnetic slots are spaced from each other, and are spaced from a boundary of the axial surface A (In other words, the magnetic slots do not penetrate through the circumferential surface C). One first outer magnetic slot 1812 and one second outer magnetic slot 1813 that are adjacent to each other form a V shape. The V-shaped opening faces the outside of the rotor core lamination 181. One first inner magnetic slot 1811 and one second inner magnetic slot 1814 that are adjacent to each other also form a V shape. The V-shaped opening also faces the outside of the rotor core lamination 181. The first outer magnetic slot 1812 and the second outer magnetic slot 1813 that form the V shape, and the first inner magnetic slot 1811 and the second inner magnetic slot 1814 that form the V shape form one magnetic slot unit. In the magnetic slot unit, the first inner magnetic slot 1811 and the second inner magnetic slot 1814 encircle the periphery of the first outer magnetic slot 1812 and the second outer magnetic slot 1813. In each magnetic slot unit, the first outer magnetic slot 1812 and the second outer magnetic slot 1813 have the same shape, and the first inner magnetic slot 1811 and the second inner magnetic slot 1814 have the same shape. A plurality of such magnetic slot units may be spaced from each other and distributed in an array form around the axis of the rotor core lamination 181. The permanent magnet 19 is disposed in each magnetic slot. A combination of one magnetic slot unit and the permanent magnet 19 disposed in the magnetic slot unit may be referred to as one magnetic pole unit. The rotor core lamination 181 may be further provided with a plurality of lightening holes 1815. The lightening holes 1815 penetrate through the two opposite ends of the rotor core lamination 181 in the axial direction of the rotor core lamination 181. The lightening holes 1815 are spaced from the magnetic slots. The lightening holes 1815 are configured to reduce a weight of the rotor core lamination 181, to improve a rotation speed of the rotor core lamination 181.

As shown in FIG. 7, in the single magnetic slot unit, an obtuse angle is formed between the first outer magnetic slot 1812 and the second outer magnetic slot 1813. The obtuse angle faces the outside of the rotor core lamination 181. To be specific, two ends with a relatively small spacing between the first outer magnetic slot 1812 and the second outer magnetic slot 1813 are located at the inner periphery of the rotor core lamination 181, and two ends with a relatively large spacing between the first outer magnetic slot 1812 and the second outer magnetic slot 1813 are located at the outer periphery of the rotor core lamination 181. Similarly, an obtuse angle is formed between the first inner magnetic slot 1811 and the second inner magnetic slot 1814. The obtuse angle faces the outside of the rotor core lamination 181. To be specific, two ends with a relatively small spacing between the first inner magnetic slot 1811 and the second inner magnetic slot 1814 are located at the inner periphery of the rotor core lamination 181, and two ends with a relatively large spacing between the first inner magnetic slot 1811 and the second inner magnetic slot 1814 are located at the outer periphery of the rotor core lamination 181. From the axial direction of the rotor core lamination 181, the first outer magnetic slot 1812 and the second outer magnetic slot 1813 are located in a region of the obtuse angle between the first inner magnetic slot 1811 and the second inner magnetic slot 1814. In other words, the first inner magnetic slot 1811 and the second inner magnetic slot 1814 encircle the periphery of the first outer magnetic slot 1812 and the second outer magnetic slot 1813. In the single magnetic slot unit, the obtuse angle formed between the first outer magnetic slot 1812 and the second outer magnetic slot 1813 is greater than or equal to the obtuse angle formed between the first inner magnetic slot 1811 and the second inner magnetic slot 1814. The first outer magnetic slot 1812 and the second outer magnetic slot 1813 are symmetrical about a radius of the rotor core lamination 181, and the first inner magnetic slot 1811 and the second inner magnetic slot 1814 are also symmetrical about this radius. In other words, the symmetry axis of the first outer magnetic slot 1812 and the second outer magnetic slot 1813 is the same as the symmetry axis of the first inner magnetic slot 1811 and the second inner magnetic slot 1814. In another implementation, the symmetry axis of the inner magnetic slots and the symmetry axis of the outer magnetic slots in the single magnetic slot unit may be different according to a product requirement, or at least one of an inner magnetic slot pair and an outer magnetic slot pair may be asymmetrically arranged. In addition, the first inner magnetic slot 1811 may communicate with the second inner magnetic slot 1814, and/or the first outer magnetic slot 1812 may communicate with the second outer magnetic slot 1813.

The magnetic slot extends along the axis of the rotor core lamination 181 and penetrates through the rotor core lamination 181. A formed opening of the magnetic slot at the axial surface A is a cross-sectional profile of the magnetic slot. For the single magnetic slot unit, the following continues to describe a magnetic slot design in the embodiments of this application by using the opening as a description object.

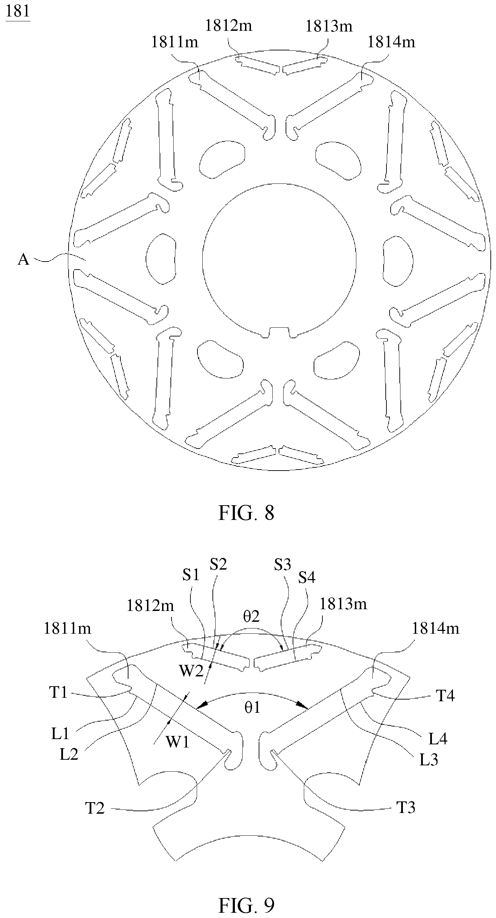

As shown in FIG. 7, FIG. 8, and FIG. 9, the first inner magnetic slot 1811 has a first inner opening 1811m at the axial surface A, and the second inner magnetic slot 1814 has a second inner opening 1814m at the axial surface A. Ends that are of the first inner opening 1811m and the second inner opening 1814m and that are close to a circle center of the axial surface A are both spaced from the circle center. The first inner opening 1811m may include two parallel opposite straight sides L1 and L2. The second inner opening 1814m may also include two parallel opposite straight sides L3 and L4. An obtuse angle is formed between the straight side L2 of the first inner opening 1811m and the straight side L3 of the second inner opening 1814m. The obtuse angle may be referred to as an inner magnetic pole included angle θ1. In other words, the inner magnetic pole included angle θ1 is formed between the first inner opening 1811m and the second inner opening 1814m. The inner magnetic pole θ1 is the obtuse angle between the first inner magnetic slot 1811 and the second inner magnetic slot 1814. A range of the inner magnetic pole included angle Θ1 may be, for example, [110°, 140°]. The first inner opening 1811m and the second inner opening 1814m are both strip-shaped. A spacing between the two parallel opposite straight sides L1 and L2 of the first inner opening 1811m is referred to as a width W1 of the first inner opening 1811m. The width W1 of the first inner opening 1811m may be, for example, 2 mm to 6 mm (including the endpoint values). Similarly, a spacing between the two parallel opposite straight sides L3 and L4 of the second inner opening 1814m is referred to as a width of the second inner opening 1814m. The width of the second inner opening 1814m is equal to the width W1 of the first inner opening 1811m. Space between the two straight sides L1 and L2 of the first inner opening 1811m and space between the two straight sides L3 and L4 of the second inner opening 1814m are both used to dispose the permanent magnet 19. Protrusion parts T1 and T2 may be formed at two opposite ends of one straight side (for example, the lower straight side L1 in FIG. 9) of the first inner opening 1811m. The two protrusion parts T1 and T2 at the two ends are configured to clamp the permanent magnet 19. Similarly, protrusion parts T3 and T4 may be formed at two opposite ends of one straight side (for example, the lower straight side L4 in FIG. 9) of the second inner opening 1814m. The two protrusion parts T3 and T4 at the two ends are configured to clamp the permanent magnet 19. Certainly, for the first inner opening 1811m, the protrusion part T1 and the protrusion part T2 may be respectively located on the straight side L1 and the straight side L2. In other words, the protrusion part T1 and the protrusion part T2 are diagonally distributed. For the second inner opening 1814m, the protrusion part T3 and the protrusion part T4 may also be respectively located on the straight side L3 and the straight side L4. In other words, the protrusion part T3 and the protrusion part T4 are diagonally distributed. In another implementation, value matching may be performed on the inner magnetic pole included angle Θ1 and/or the width W1 of the first inner opening 1811m according to a requirement. This is not limited to the foregoing.

As shown in FIG. 7 to FIG. 9, the first outer magnetic slot 1812 has a first outer opening 1812m at the axial surface A, and the second outer magnetic slot 1813 has a second outer opening 1813m at the axial surface A. The first outer opening 1812m and the second outer opening 1813 m are both located in the region of the inner magnetic pole included angle θ1. The first outer opening 1812m may include two parallel opposite straight sides S1 and S2, and the second outer opening 1813m may also include two parallel opposite straight sides S3 and S4. An obtuse angle is formed between the straight side S2 of the first outer opening 1812m and the straight side S3 of the second outer opening 1813m. The obtuse angle may be referred to as an outer magnetic pole included angle θ2. In other words, the outer magnetic pole included angle Θ2 is formed between the first outer opening 1812m and the second outer opening 1813m. The outer magnetic pole included angle Θ2 is the obtuse angle formed between the first outer magnetic slot 1812 and the second outer magnetic slot 1813. A range of the outer magnetic pole included angle Θ2 may be, for example, [110°, 160°]. The first outer opening 1812m and the second outer opening 1813m are both strip-shaped. A spacing between the two parallel opposite straight sides S1 and S2 of the first outer opening 1812m is referred to as a width W2 of the first outer opening 1812m. The width W2 of the first outer opening 1812m may be, for example, 1 mm to 3 mm (including the endpoint values). Similarly, a spacing between the two parallel opposite straight sides S3 and S4 of the second outer opening 1813m is referred to as a width of the second outer opening 1813m. The width of the second outer opening 1813m is equal to the width W2 of the first outer opening 1812m. Space between the two straight sides S1 and S2 of the first outer opening 1812m and space between the two straight sides S3 and S4 of the second inner opening 1813m are both used to dispose the permanent magnet 19. Similar to the design in which the first inner opening 1811m and the second inner opening 1814m include the protrusion parts, protrusion parts may also be formed at two opposite ends of the straight side S1 of the first outer opening 1812m, and protrusion parts may also be formed at two opposite ends of the straight side S4 of the second outer opening 1813m. The protrusion parts are configured to clamp the permanent magnet 19. Certainly, for the first outer opening 1812m or the second outer opening 1813m, the two protrusion parts may be respectively located on the two straight sides S1 and S2, or S3 and S4, that is, the two protrusion parts are diagonally distributed. In another implementation, value matching may be performed on the outer magnetic pole included angle Θ2 and/or the width W2 of the first outer opening 1812m according to a requirement. This is not limited to the foregoing.

The outer magnetic pole included angle θ2 is greater than or equal to the inner magnetic pole included angle θ1. A range of a difference between the two angles is [0°, 50°]. The width W1 of the first inner opening 1811m is 1.5 times to 2 times (including the endpoint values) the width W2 of the first outer opening 1812m.

In the permanent magnet synchronous motor 13, a value of the width W2 of the first outer opening 1812m and a value of the width W1 of the first inner opening 1811m greatly affect magnetic reluctance of a d-axis magnetic circuit of the motor, that is, greatly affect inductance of the d-axis magnetic circuit. A value of the outer magnetic pole included angle Θ2 and a value of the inner magnetic pole included angle Θ1 greatly affect magnetic reluctance of a q-axis magnetic circuit of the motor, that is, greatly affect inductance of the q-axis magnetic circuit (smaller magnetic reluctance indicates larger inductance, and larger magnetic reluctance indicates smaller inductance). A saliency ratio of the motor is a ratio of the q-axis inductance to the d-axis inductance. A motor torque is a sum of a reluctance torque (an electromagnetic torque component generated due to a difference between the q-axis inductance and the d-axis inductance of the permanent magnet synchronous motor 13) and a permanent magnet torque (an electromagnetic torque component generated by the permanent magnet 19 of the permanent magnet synchronous motor 13). A quantity of permanent magnets 19 is positively correlated to the permanent magnet torque.

In this implementation, value matching is performed on the width W2 of the first outer opening 1812m and the width W1 of the first inner opening 1811m, and the outer magnetic pole included angle Θ2 and the inner magnetic pole included angle θ1, to increase a ratio of the q-axis inductance to the d-axis inductance of the motor, thereby improving the saliency ratio. After the saliency ratio is improved, the motor has higher utilization for the reluctance torque. When the motor torque with the same magnitude is implemented, the permanent magnet torque may be relatively small, to reduce the quantity of permanent magnets 19 (for example, reduce the quantity by 20%), thereby reducing the costs. In addition, because the outer magnetic pole included angle Θ2 is not equal to the inner magnetic pole included angle Θ1 (that is, parallel nesting is not implemented between the inner and outer magnetic slots), the width W2 of the first outer opening 1812m is not equal to the width W1 of the first inner opening 1811m. In this way, more combinations may be generated when value matching is performed on the outer magnetic pole included angle Θ2 and the inner magnetic pole included angle θ1, and more combinations may also be generated when value matching is performed on the width W2 of the first outer opening 1812m and the width W1 of the first inner opening 1811m. Therefore, the saliency ratio can be more flexibly optimized to meet a product requirement. In addition, the q-axis inductance and the d-axis inductance may be relatively large, to increase the inductance of the motor and facilitate control on an operation of the motor, thereby improving performance of the motor. In addition, the d-axis inductance is relatively large, thereby improving flux weakening and speed expansion capabilities of the motor.

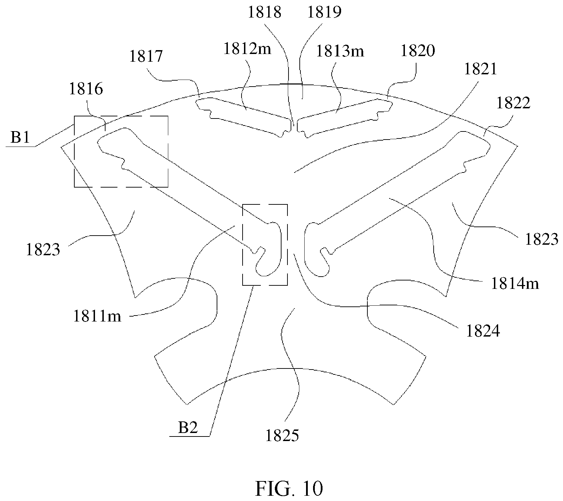

As shown in FIG. 10, in this implementation, the first outer opening 1812m and the second outer opening 1813m are spaced from each other. A flux barrier 1818 is formed between two ends that are of the two openings and that are close to each other. A flux barrier 1817 is formed between the first outer opening 1812m and the boundary of the axial surface A, and a flux barrier 1820 is formed between the second outer opening 1813m and the boundary of the axial surface A. A region limited by the outer magnetic pole included angle Θ2 may be referred to as a rotor pole piece core 1819. Correspondingly, the first inner opening 1811m and the second inner opening 1814m are spaced from each other. A flux barrier 1824 is formed between two ends that are of the two openings and that are close to each other. A flux barrier 1816 is formed between the first inner opening 1811m and the boundary of the axial surface A, and a flux barrier 1822 is formed between the second inner opening 1814m and the boundary of the axial surface A. A region jointly limited by the inner magnetic pole included angle θ1 and the outer magnetic pole included angle Θ2 may be referred to as a core branch 1821. The rotor pole piece core 1819 is connected to the core branch 1821 by using the flux barrier 1818. A region connected to a side of the flux barrier 1824 that is away from the core branch 1821 may be referred to as a rotor yoke 1825. The rotor yoke 1825 is an axial central region of the rotor core lamination 181. A magnetic induction line of the permanent magnet 19 successively passes through the rotor yoke 1825, the core branch 1821, and the rotor pole piece core 1819 to reach the air gap. In other words, the rotor yoke 1825, the core branch 1821, and the rotor pole piece core 1819 are all transmission paths of the magnetic induction line. A region between adjacent magnetic slot units is referred to as a magnetic rib 1823. The magnetic rib 1823 is located between the first inner opening 1811m of one magnetic slot unit and the second inner opening 1814m of another adjacent magnetic slot unit.

In this implementation, due to limitation of a structure and a size of the flux barrier, a magnetic flux passing through the flux barrier is limited. A magnetic blocking phenomenon may occur when the flux barrier reaches a magnetic saturation state. In this case, other magnetic induction lines cannot pass through the flux barrier, but can only reach the air gap through the transmission path and be transferred to the stator 14 to implement electromagnetic induction. Therefore, setting of the flux barrier can ensure that most magnetic induction lines can pass through the transmission path, to reduce magnetic leakage. In addition, setting of the flux barrier can also increase mechanical strength of the rotor core lamination 181. In particular, the flux barrier 1818 formed between the two ends that are of the first outer opening 1812m and the second outer opening 1813m and that are close to each other, the flux barrier 1817 formed between the first outer opening 1812m and the boundary of the axial surface A, and the flux barrier 1820 formed between the second outer opening 1813m and the boundary of the axial surface A can jointly bear stress, to avoid damage to the rotor core lamination 181 due to inner stress during high-speed rotation of the rotor core lamination 181. The mechanical strength of the rotor core lamination 181 is improved, so that a peak rotation speed of the motor is no longer limited (for example, the peak rotation speed can be improved by 20%), to ensure power density of the motor.

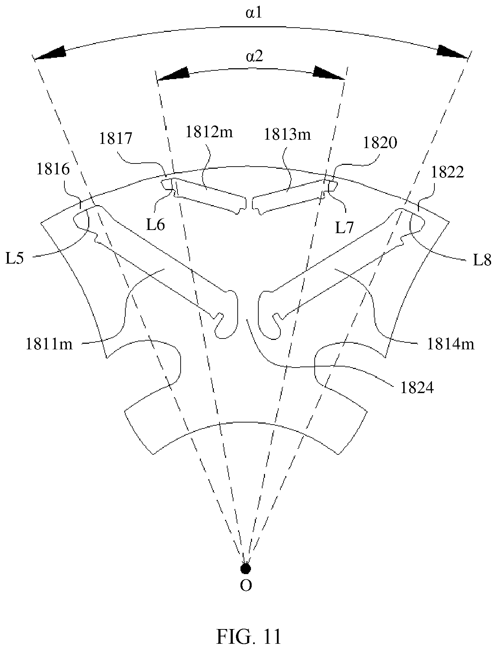

In this implementation, an outer pole arc angle α2 and an inner pole arc angle α1 may be defined at the axial surface A of the rotor core lamination 181. Vertices of the outer pole arc angle α2 and the inner pole arc angle α1 are both the circle center O of the axial surface A. Specifically, as shown in FIG. 11, the first outer opening 1812m has a first outer peripheral side L6 facing the boundary of the axial surface A. The first outer peripheral side L6 is a straight line. The first outer peripheral side L6 is also a boundary of the flux barrier 1817. A connection line between the circle center O and one end of the first outer peripheral side L6 that is close to the second outer opening 1813m is used as a side of the outer pole arc angle α2. When the end of the first outer peripheral side L6 that is close to the second outer opening 1813m is connected to a rounded corner arc, the side of the outer pole arc angle α2 passes through an endpoint of the first outer peripheral side L6 instead of a point on the rounded corner arc. Similarly, the second outer opening 1813m has a second outer peripheral side L7 facing the boundary of the axial surface A. The second outer peripheral side L7 is a straight line. The second outer peripheral side L7 is also a boundary of the flux barrier 1820. A connection line between the circle center O and one end of the second outer peripheral side L7 that is close to the first outer opening 1812m is used as the other side of the outer pole arc angle α2. When the end of the second outer peripheral side L7 that is close to the first outer opening 1812m is connected to a rounded corner arc, the other side of the outer pole arc angle α2 passes through an endpoint of the second outer peripheral side L7 instead of a point on the rounded corner arc. Similarly, the first inner opening 1811m has a first inner peripheral side L5 facing the boundary of the axial surface A. The first inner peripheral side L5 is a straight line. The first inner peripheral side L5 is also a boundary of the flux barrier 1816. A connection line between the circle center O and one end of the first inner peripheral side L5 that is close to the second inner opening 1814m is used as a side of the inner pole arc angle α1. When the end of the first inner peripheral side L5 that is close to the second inner opening 1814m is connected to a rounded corner arc, the side of the inner pole arc angle α1 passes through an endpoint of the first inner peripheral side L5 instead of a point on the rounded corner arc. Similarly, the second inner opening 1814m has a second inner peripheral side L8 facing the boundary of the axial surface A. The second inner peripheral side L8 is a straight line. The second inner peripheral side L8 is also a boundary of the flux barrier 1822. A connection line between the circle center O and one end of the second inner peripheral side L8 that is close to the first inner opening 1811m is used as the other side of the inner pole arc angle α1. When the end of the second inner peripheral side L8 that is close to the first inner opening 1811m is connected to a rounded corner arc, the other side of the inner pole arc angle α1 passes through an endpoint of the second inner peripheral side L8 instead of a point on the rounded corner arc.

In this implementation, the inner pole arc angle α1 is greater than the outer pole arc angle α2, and the inner pole arc angle α1 may be 2 times to 2.5 times (including the endpoint values) the outer pole arc angle α2. For example, the inner pole arc angle α1 may be 40° to 56.67° (including the endpoint values), and the outer pole arc angle α2 may be 18.33° to 26.67° (including the endpoint values). In another implementation, value matching may be performed on the inner pole arc angle α1 and/or the outer pole arc angle α2 according to a requirement. This is not limited to the foregoing.

A resultant magnetic potential of the magnetic pole unit is obtained by superimposing a magnetic potential (hereinafter referred to as an outer-layer magnetic potential) generated by the permanent magnet 19 in the first outer magnetic slot 1812 and the permanent magnet 19 in the second outer magnetic slot 1813, and a magnetic potential (hereinafter referred to as an inner-layer magnetic potential) generated by the permanent magnet 19 in the first inner magnetic slot 1811 and the permanent magnet 19 in the second inner magnetic slot 1814. The resultant magnetic potential is affected by the outer-layer magnetic potential or the inner-layer magnetic potential alone, and certainly is also affected by a superimposition result of the two potentials. Waveforms of the resultant magnetic potential, the outer-layer magnetic potential, and the inner-layer magnetic potential each include a fundamental wave and a harmonic wave. The fundamental wave and the harmonic wave of the outer-layer magnetic potential are both related to the outer magnetic pole included angle Θ2 and the outer pole arc angle α2, and the fundamental wave and the harmonic wave of the inner-layer magnetic potential are both related to the inner magnetic pole included angle Θ1 and the inner pole arc angle α1.

With reference to FIG. 9 and FIG. 11, in this implementation, value matching is performed on the inner magnetic pole included angle θ1, the outer magnetic pole included angle θ2, the inner pole arc angle α1, and the outer pole arc angle α2 at the same time, to optimize a waveform of the resultant magnetic potential, effectively suppress a harmonic wave component in the waveform of the resultant magnetic potential, and improve sine of a waveform in a magnetic field of an air gap. In this way, a cogging torque and a torque ripple of the permanent magnet synchronous motor 13 are reduced, and vibration noise of the motor is reduced. In addition, because the outer magnetic pole included angle Θ2 is not equal to the inner magnetic pole included angle Θ1, more combinations may be generated when value matching is performed on the outer magnetic pole included angle Θ2 and the inner magnetic pole included angle θ1, to more flexibly optimize the waveform of the resultant magnetic potential, thereby meeting a product requirement. In another implementation, the design is not required.

In this implementation, an arc transition design may further be implemented on the opening of the magnetic slot, to optimize stress distribution and avoid stress concentration.

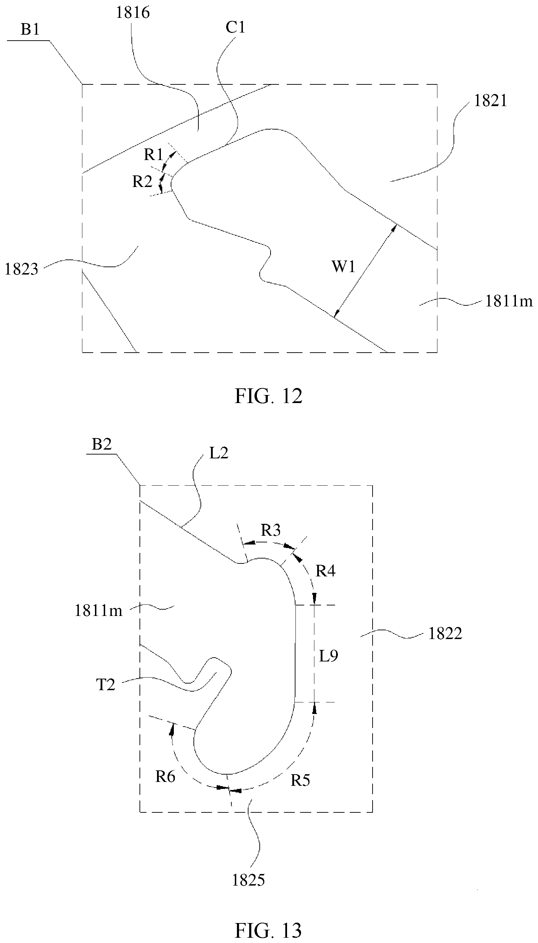

Specifically, as shown in FIG. 9, FIG. 10, and FIG. 12, an end of the first inner opening 1811m that is away from the second inner opening 1814m may include two arc segments R1 and R2 (referred to as rounded arcs). The arc segment R1 is tangent to and connected to the arc segment R2. The arc segment R1 and the arc segment R2 each have a chord (the chord indicates a line segment connecting two endpoints of the arc). An obtuse angle is formed between the chords of the arc segment R1 and the arc segment R2. Therefore, a smooth transition occurs between the two arc segments R1 and R2. A sharp corner is not formed. The two arc segments R1 and R2 may be specifically disposed at a connection between the flux barrier 1816 and the magnetic rib 1823, and/or at a connection between the flux barrier 1816 and the core branch 1821. The first inner opening 1811m has a relatively large width W1. An end of the first inner opening 1811m that is away from the second inner opening 1814m is relatively distant from the circle center of the axial surface A. In this case, when the rotor core lamination 181 rotates at a high speed, relatively large stress occurs at the end under the function of centrifugal force. This arc transition structure can be used to effectively reduce a curvature change at the end, so that the stress is relatively evenly distributed at the end and a stress concentration factor is relatively small, to avoid stress concentration at the end. Certainly, according to a product requirement, the smooth transition may occur between three or more arc segments. This arc transition structure may also be applied at an end of the second inner opening 1814m that is away from the first inner opening 1811m. The arc transition structure at the end is symmetrical to the arc transition structure at the end of the first inner opening 1811m that is away from the second inner opening 1814m. Two ends that are of the first outer opening 1812m and the second outer opening 1813m and that are close to each other may both have the arc transition structures. The two arc transition structures are symmetrical. Two ends that are of the first outer opening 1812m and the second outer opening 1813m and that are away from each other may both have the arc transition structures. The two arc transition structures are symmetrical. Certainly, in this embodiment of this application, the arc transition structure is not required. For example, the opening of the magnetic slot may include only a straight line segment.

In particular, because the end of the first inner opening 1811m that is close to the second inner opening 1814m is close to the rotor yoke 1825, structure space is large, and the arc transition structure at the end may be more complex. Specifically, as shown in FIG. 9, FIG. 10, and FIG. 13, an end of the first inner opening 1811m that is close to the second inner opening 1814m may include a first arc segment R3, a second arc segment R4, a straight line segment L9, a third arc segment R5, and a fourth arc segment R6. The first arc segment R3, the second arc segment R4, the straight line segment L9, the third arc segment R5, and the fourth arc segment R6 are connected in sequence. The straight line segment L9 may be used as a width boundary of the flux barrier. A straight line shape of the straight line segment L9 can be used to ensure structural strength of the flux barrier. The second arc segment R4 and the third arc segment R5 are respectively tangent to two opposite ends of the straight line segment L9. A smooth transition connection is formed between the first arc segment R3 and the second arc segment R4. In other words, the first arc segment R3 is tangent to the second arc segment R4. An obtuse angle is formed between chords of the first arc segment R3 and the second arc segment R4. Similarly, a smooth transition connection is also formed between the third arc segment R5 and the fourth arc segment R6. In other words, the third arc segment R5 is tangent to the fourth arc segment R6. The obtuse angle is formed between the chords of the first arc segment R3 and the second arc segment R4. A smooth transition between a plurality of arc segments facilitates further reduction of a curvature change at an end of the first inner opening 1811m that is close to the second inner opening 1814m, so that stress is more evenly distributed, to avoid stress concentration. This arc transition structure may also be applied at an end of the second inner opening 1814m that is close to the first inner opening 1811m. The arc transition structure at the end is symmetrical to the arc transition structure at the end of the first inner opening 1811m that is close to the second inner opening 1814m.

In this implementation, shape sizes and position sizes of the first arc segment R3, the second arc segment R4, the straight line segment L9, the third arc segment R5, and the fourth arc segment R6 may be properly designed according to a product requirement. For example, as shown in FIG. 9, FIG. 10, and FIG. 13, the first arc segment R3 may be connected to the straight side L2 of the first inner opening 1811m. One end of the fourth arc segment R6 that is away from the third arc segment R5 may be connected to the protrusion part T2. In this case, an "auricle-shaped" structure may be presented at the end of the first inner opening 1811m and that is close to the second inner opening 1814m. The "auricle-shaped" structure can be used to not only facilitate optimization of stress distribution, but also can be well adapted to the protrusion part T2 and a main part of the first inner opening 1811m, thereby improving mass production of the rotor core lamination 181. Certainly, the "auricle-shaped" structure is merely an example but is not required.

In this implementation, radiuses of arc segments may be different in the arc transition structure. This design can refine a gradient of the curvature change. The stress is more smoothly distributed, to further reduce a stress concentration factor. Certainly, this design is not required. For example, the radiuses of all the arc segments may be the same.

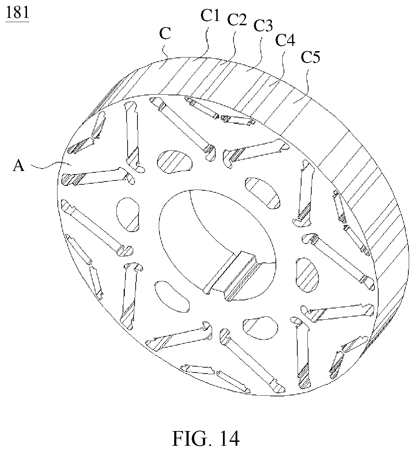

As shown in FIG. 14, in an embodiment of the claimed invention, a partial region of the circumferential surface C of the rotor core lamination 181 curves inward to form a concave. The concave may be strip-shaped. The concave has two parallel opposite sides parallel to the axial direction of the rotor core lamination 181. The concave extends in the axial direction of the rotor core lamination 181. The concave penetrates through the axial surface A of the rotor core lamination 181 at two opposite ends. The concave may form an arc-shaped opening at the axial surface A. A depth of the concave may be relatively small, to avoid a relatively large change to a shape of the circumferential surface C. There is a plurality of concaves. For example, a concave C1, a concave C2, a concave C4, and a concave C5 each may be disposed near each magnetic slot unit. The plurality of concaves are spaced from each other and distributed at the circumferential surface C. Setting of the concave changes the shape of the circumferential surface C of the rotor core lamination 181 and that of the rotor core 18, to further change the air gap between the rotor 15 and the stator 14. In the permanent magnet synchronous motor 13, a magnetic conductance waveform of the air gap is related to a width of the air gap. In this implementation, setting of the concave can partially increase the width of the air gap, to optimize the magnetic conductance waveform of the air gap and suppress a harmonic wave component in the magnetic conductance waveform of the air gap. In addition, magnetic field intensity of the rotor 15 = magnetic potential * magnetic conductance. It may be learned that, based on the solution of optimizing the waveform of the resultant magnetic potential, in cooperation with the optimization of the magnetic conductance waveform of the air gap in this implementation, a harmonic wave component of the magnetic field intensity of the air gap can be further suppressed, and sine of the waveform of the magnetic field intensity of the air gap can be improved. In another implementation, specific structures and a quantity of concaves are not limited to the foregoing.

As shown in FIG. 14, a partial region of the circumferential surface C protrudes to form a protrusion C3. The protrusion C3 may be strip-shaped. The protrusion C3 has two parallel opposite sides parallel to the axial direction of the rotor core lamination 181. The protrusion C3 extends in the axial direction of the rotor core lamination 181. The protrusion C3 extends to the axial surface A at two opposite ends in the axial direction. Concaves are symmetrically distributed on two opposite sides of the protrusion C3. The concave is spaced from the protrusion C3. For example, the concave C1 and the concave C2 may be disposed on one side of the protrusion C3, and the concave C4 and the concave C5 may be disposed on the other side of the protrusion C3. The concave C1 and the concave C5 are symmetrical, and the concave C2 and the concave C4 are symmetrical. Similarly, setting of the protrusion C3 also changes the shape of the circumferential surface C of the rotor core lamination 181 and that of the rotor core 18, to further partially reduce the air gap, further optimize the magnetic conductance waveform of the air gap, and suppress the harmonic wave component in the magnetic conductance waveform of the air gap. In addition, the harmonic component of the magnetic field intensity of the air gap may be suppressed, to improve sine of the waveform of the magnetic field intensity of the air gap. In addition, setting of both the protrusion C3 and the concave can more finely adjust the magnetic conductance waveform of the air gap and the waveform of the magnetic field intensity of the air gap. In another implementation, a quantity of protrusions C3 is not limited to the foregoing.

The foregoing descriptions are merely specific implementations of this application, but are not intended to limit.

The scope of protection is defined in the claims.

## Claims

1. A rotor core lamination, wherein
the rotor core lamination (181) has an axial surface (A), the axial surface (A) is provided with a first inner magnetic slot (1811), a second inner magnetic slot (1814), a first outer magnetic slot (1812), and a second outer magnetic slot (1813), the first inner magnetic slot (1811) has a first inner opening (1811m) at the axial surface (A), the second inner magnetic slot (1814) has a second inner opening (1814m) at the axial surface (A), an inner magnetic pole included angle Θ1 is formed between the first inner opening (1811m) and the second inner opening (1814m), the inner magnetic pole included angle θ1 faces the outside of the rotor core lamination, the inner magnetic pole included angle Θ1 is an obtuse angle, the first outer magnetic slot (1812) has a first outer opening (1812m) at the axial surface (A), the second outer magnetic slot (1813) has a second outer opening (1813m) at the axial surface (A), the first outer opening (1812m) and the second outer opening (1813m) are both located in a region of the inner magnetic pole included angle θ1, an outer magnetic pole included angle Θ2 is formed between the first outer opening (1812m) and the second outer opening (1813m), the outer magnetic pole included angle Θ2 faces the outside of the rotor core lamination, the outer magnetic pole included angle Θ2 is an obtuse angle greater than or equal to the inner magnetic pole included angle θ1, a difference between the outer magnetic pole included angle Θ2 and the inner magnetic pole included angle θ1 is in [0°, 50°], the first inner opening (1811m) and the second inner opening (1814m) are both spaced from the first outer opening (1812m) and the second outer opening (1813m), and a width (W1) of the first inner opening (1811m) is 1.5 times to 2 times a width (W2) of the first outer opening (1812m);
wherein the rotor core lamination has a circumferential surface; **characterized in that** a partial region of the circumferential surface curves inward to form a plurality of concaves (C1, C2, C4, C5), each concave (C1, C2, C4, C5) has two opposite sides parallel to an axial direction, and the concave (C1, C2, C4, C5) penetrates through the axial surface (A) at two opposite ends in the axial direction;
a partial region of the circumferential surface protrudes to form a protrusion (C3), the protrusion (C3) extends to the axial surface (A) at the two opposite ends in the axial direction, the protrusion (C3) has two opposite sides parallel to the axial direction, said concaves are symmetrically distributed on two opposite sides of the protrusion (C3), and said concaves (C1, C2, C4, C5) are spaced from the protrusion (C3).

2. The rotor core lamination according to claim 1, wherein
the rotor core lamination has an outer pole arc angle (α2) and an inner pole arc angle (α1), one side of the outer pole arc angle (α2) passes through one end that is in a region between the first outer opening (1812m) and a boundary of the axial surface (A) and that is close to the second outer opening (1813m), the other side of the outer pole arc angle (α2) passes through one end that is in a region between the second outer opening (1813m) and the boundary of the axial surface (A) and that is close to the first outer opening (1812m), one side of the inner pole arc angle (α1) passes through one end that is in a region between the first inner opening (1811m) and the boundary of the axial surface (A) and that is close to the second inner opening (1814m), the other side of the inner pole arc angle (α1) passes through one end that is in a region between the second inner opening (1814m) and the boundary of the axial surface (A) and that is close to the second inner opening (1814m), and the inner pole arc angle (α1) is 2 times to 2.5 times the outer pole arc angle (α2).

3. The rotor core lamination according to claim 1 or 2, wherein
one end of the first inner opening that is close to or away from the second inner opening comprises at least two arc segments, the at least two arc segments are tangent in sequence, and an obtuse angle is formed between chords of the two adjacent arc segments.

4. The rotor core lamination according to claim 3, wherein
the end of the first inner opening that is close to the second inner opening comprises a first arc segment, a second arc segment, a straight line segment, a third arc segment, and a fourth arc segment that are connected in sequence, the second arc segment is tangent to the straight line segment, and the straight line segment is tangent to the third arc segment.

5. The rotor core lamination according to claim 3, wherein
the at least two arc segments (R1, R2) have different radiuses.

6. The rotor core lamination according to claim 1 or 2, wherein
a flux barrier is formed between two ends that are of the first outer opening (1812m) and the second outer opening (1813m) and that are close to each other.

7. A rotor core comprising a plurality of rotor core laminations according to any one of claims 1 to 6, wherein all the rotor core laminations are stacked in an axial direction.

8. A rotor comprising a rotating shaft, a permanent magnet, and the rotor core according to claim 7, wherein the permanent magnet is disposed in each of the first outer magnetic slot (1812), the second outer magnetic slot (1813), the first inner magnetic slot (1811), and the second inner magnetic slot (1814) of each rotor core lamination, the rotating shaft passes through the rotor core in an axial direction of the rotor core and is fixedly connected to the rotor core, and the first outer magnetic slot (1812), the second outer magnetic slot (1813), the first inner magnetic slot (1811), and the second inner magnetic slot (1814) of each rotor core lamination are all distributed on the periphery of the rotating shaft.

9. A permanent magnet synchronous motor comprising a stator and the rotor according to claim 8, wherein the stator is sleeved on the periphery of the rotor core, an air gap is left between the stator and the rotor core, and the rotating shaft extends out of the stator.

10. A powertrain comprising a motor controller and the permanent magnet synchronous motor according to claim 9, wherein the motor controller is electrically connected to the permanent magnet synchronous motor.

11. An electric vehicle comprising a vehicle frame and the powertrain according to claim 10, wherein the powertrain is disposed on the vehicle frame.

## Patentansprüche

1. Läuferblechpaket, wobei
das Läuferblechpaket (181) eine axiale Oberfläche (A) aufweist, die axiale Oberfläche (A) mit einem ersten inneren Magnetschlitz (1811), einem zweiten inneren Magnetschlitz (1814), einem ersten äußeren Magnetschlitz (1812) und einem zweiten äußeren Magnetschlitz (1813) versehen ist, der erste innere Magnetschlitz (1811) eine erste innere Öffnung (1811m) an der axialen Oberfläche (A) aufweist, der zweite innere Magnetschlitz (1814) eine zweite innere Öffnung (1814m) an der axialen Oberfläche (A) aufweist, ein innerer eingeschlossener Magnetpolwinkel θ1 zwischen der ersten inneren Öffnung (1811m) und der zweiten inneren Öffnung (1814m) ausgebildet ist, der innere eingeschlossene Magnetpolwinkel θ1 der Außenseite des Läuferblechpakets zugewandt ist, der innere eingeschlossene Magnetpolwinkel θ1 ein stumpfer Winkel ist, der erste äußere Magnetschlitz (1812) eine erste äußere Öffnung (1812m) an der axialen Oberfläche (A) aufweist, der zweite äußere Magnetschlitz (1813) eine zweite äußere Öffnung (1813m) an der axialen Oberfläche (A) aufweist, die erste äußere Öffnung (1812m) und die zweite äußere Öffnung (1813m) beide in einem Bereich des inneren eingeschlossenen Magnetpolwinkels θ1 liegen, ein äußerer eingeschlossener Magnetpolwinkel θ2 zwischen der ersten äußeren Öffnung (1812m) und der zweiten äußeren Öffnung (1813m) ausgebildet ist, der äußere eingeschlossene Magnetpolwinkel θ2 der Außenseite des Läuferblechpakets zugewandt ist, der äußere eingeschlossene Magnetpolwinkel θ2 ein stumpfer Winkel, der größer als oder gleich dem inneren eingeschlossenen Magnetpolwinkel θ1 ist, ist, ein Unterschied zwischen dem äußeren eingeschlossenen Magnetpolwinkel θ2 und dem inneren eingeschlossenen Magnetpolwinkel θ1 in [0°, 50°] ist, die erste innere Öffnung (1811m) und die zweite innere Öffnung (1814m) beide von der ersten äußeren Öffnung (1812m) und der zweiten äußeren Öffnung (1813m) beabstandet sind und eine Breite (W1) der ersten inneren Öffnung (1811m) 1,5-mal bis 2-mal eine Breite (W2) der ersten äußeren Öffnung (1812m) ist;
wobei das Läuferblechpaket eine Umfangsoberfläche aufweist;
**dadurch gekennzeichnet, dass** ein Teilbereich der Umfangsoberfläche nach innen gebogen ist, um eine Vielzahl von Konkavitäten (C1, C2, C4, C5) auszubilden, wobei jede Konkavität (C1, C2, C4, C5) zwei gegenüberliegende Seiten parallel zu einer axialen Richtung aufweist und die Konkavität (C1, C2, C4, C5) die axiale Oberfläche (A) an zwei gegenüberliegenden Enden in der axialen Richtung durchdringt;
ein Teilbereich der Umfangsoberfläche vorspringt, um einen Vorsprung (C3) auszubilden, wobei sich der Vorsprung (C3) an den zwei gegenüberliegenden Enden in der axialen Richtung zu der axialen Oberfläche (A) erstreckt, der Vorsprung (C3) zwei gegenüberliegende Seiten parallel zu der axialen Richtung aufweist, die Konkavitäten auf zwei gegenüberliegenden Seiten des Vorsprungs (C3) symmetrisch verteilt sind und die Konkavitäten (C1, C2, C4, C5) von dem Vorsprung (C3) beabstandet sind.

2. Läuferblechpaket nach Anspruch 1, wobei
das Läuferblechpaket einen äußeren Polbogenwinkel (α2) und einen inneren Polbogenwinkel (α1) aufweist, eine Seite des äußeren Polbogenwinkels (α2) durch ein Ende, das in einem Bereich zwischen der ersten äußeren Öffnung (1812m) und einer Grenze der axialen Oberfläche (A) ist und das nahe der zweiten äußeren Öffnung (1813m) ist, verläuft, die andere Seite des äußeren Polbogenwinkels (α2) durch ein Ende, das in einem Bereich zwischen der zweiten äußeren Öffnung (1813m) und der Grenze der axialen Oberfläche (A) ist und das nahe der ersten äußeren Öffnung (1812m) ist, verläuft, eine Seite des inneren Polbogenwinkels (α1) durch ein Ende, das in einem Bereich zwischen der ersten inneren Öffnung (1811m) und der Grenze der axialen Oberfläche (A) ist und das nahe der zweiten inneren Öffnung (1814m) ist, verläuft, die andere Seite des inneren Polbogenwinkels (α1) durch ein Ende, das in einem Bereich zwischen der zweiten inneren Öffnung (1814m) und der Grenze der axialen Oberfläche (A) ist und das nahe der zweiten inneren Öffnung (1814m) ist, verläuft, und der innere Polbogenwinkel (α1) 2-mal bis 2,5-mal der äußere Polbogenwinkel (α2) ist.

3. Läuferblechpaket nach Anspruch 1 oder 2, wobei
ein Ende der ersten inneren Öffnung, das nahe oder entfernt von der zweiten inneren Öffnung ist, mindestens zwei Bogensegmente umfasst, wobei die mindestens zwei Bogensegmente tangential aufeinanderfolgend sind und ein stumpfer Winkel zwischen Sehnen der zwei angrenzenden Bogensegmente ausgebildet ist.

4. Läuferblechpaket nach Anspruch 3, wobei
das Ende der ersten inneren Öffnung, das nahe der zweiten inneren Öffnung ist, ein erstes Bogensegment, ein zweites Bogensegment, ein Geradensegment, ein drittes Bogensegment und ein viertes Bogensegment, die aufeinanderfolgend verbunden sind, umfasst, wobei das zweite Bogensegment tangential zu dem Geradensegment ist und das Geradensegment tangential zu dem dritten Bogensegment ist.

5. Läuferblechpaket nach Anspruch 3, wobei
die mindestens zwei Bogensegmente (R1, R2) unterschiedliche Radien aufweisen.

6. Läuferblechpaket nach Anspruch 1 oder 2, wobei
eine Flussbarriere zwischen zwei Enden, die von der ersten äußeren Öffnung (1812m) und der zweiten äußeren Öffnung (1813m) sind und die nahe beieinander sind, ausgebildet ist.

7. Läuferblech, das eine Vielzahl von Läuferblechpaketen nach einem der Ansprüche 1 bis 6 umfasst, wobei alle Läuferblechpakete in einer axialen Richtung gestapelt sind.

8. Läufer, der eine Drehwelle, einen Permanentmagneten und das Läuferblech nach Anspruch 7 umfasst, wobei der Permanentmagnet in jedem des ersten äußeren Magnetschlitzes (1812), des zweiten äußeren Magnetschlitzes (1813), des ersten inneren Magnetschlitzes (1811) und des zweiten inneren Magnetschlitzes (1814) jedes Läuferblechpakets angeordnet ist, wobei die Drehwelle durch das Läuferblech in einer axialen Richtung des Läuferblechs verläuft und mit dem Läuferblech fest verbunden ist, und der erste äußere Magnetschlitz (1812), der zweite äußere Magnetschlitz (1813), der erste innere Magnetschlitz (1811) und der zweite innere Magnetschlitz (1814) jedes Läuferblechpakets alle auf dem Umfang der Drehwelle verteilt sind.

9. Permanentmagnetsynchronmotor, der einen Stator und den Läufer nach Anspruch 8 umfasst, wobei der Stator auf dem Umfang des Läuferblechs umhüllt ist, ein Luftspalt zwischen dem Stator und dem Läuferblech verbleibt und sich die Drehwelle aus dem Stator heraus erstreckt.

10. Antriebsstrang, der eine Motorsteuerung und den Permanentmagnetsynchronmotor nach Anspruch 9 umfasst, wobei die Motorsteuerung mit dem Permanentmagnetsynchronmotor elektrisch verbunden ist.

11. Elektrofahrzeug, das einen Fahrzeugrahmen und den Antriebsstrang nach Anspruch 10 umfasst, wobei der Antriebsstrang auf dem Fahrzeugrahmen angeordnet ist.

## Revendications

1. Tôle de noyau de rotor, dans lequel
la tôle de noyau de rotor (181) a une surface axiale (A), la surface axiale (A) est pourvue d'une première fente magnétique interne (1811), d'une seconde fente magnétique interne (1814), d'une première fente magnétique externe (1812) et d'une seconde fente magnétique externe (1813), la première fente magnétique interne (1811) a une première ouverture interne (1811m) au niveau de la surface axiale (A), la seconde fente magnétique interne (1814) a une seconde ouverture interne (1814m) au niveau de la surface axiale (A), un angle inclus dans le pôle magnétique θ1 est formé entre la première ouverture interne (1811m) et la seconde ouverture interne (1814m), l'angle inclus dans le pôle magnétique θ1 est tourné vers l'extérieur de la tôle de noyau de rotor, l'angle de pôle magnétique interne θ1 est un angle obtus, la première fente magnétique externe (1812) a une première ouverture externe (1812m) au niveau de la surface axiale (A), la seconde fente magnétique externe (1813) a une seconde ouverture externe (1813m) au niveau de la surface axiale (A), la première ouverture externe (1812m) et la seconde ouverture externe (1813m) sont toutes les deux situées dans une région de l'angle inclus dans le pôle magnétique interne θ1, un angle inclus dans le pôle magnétique externe θ2 est formé entre la première ouverture externe (1812m) et la seconde ouverture externe (1813m), le pôle inclus dans le pôle magnétique externe θ2 est tourné vers l'extérieur de la tôle de noyau de rotor, l'angle inclus dans le pôle magnétique externe θ2 est un angle obtus supérieur ou égal à l'angle inclus dans le pôle magnétique interne θ1, une différence entre l'angle inclus dans le pôle magnétique externe θ2 et l'angle inclus dans le pôle magnétique interne θ1 est entre [0 °, 50 °], la première ouverture interne (1811m) et la seconde ouverture interne (1814m) sont toutes les deux espacées de la première ouverture externe (1812m) et de la seconde ouverture externe (1813m), et une largeur (W1) de la première ouverture interne (1811m) est 1,5 fois à 2 fois une largeur (W2) de la première ouverture externe (1812m) ;
dans laquelle la tôle de noyau de rotor a une surface circonférentielle ; **caractérisée en ce qu'**une région partielle de la surface circonférentielle s'incurve vers l'intérieur pour former une pluralité de concaves (C1, C2, C4, C5), chaque concave (C1, C2, C4, C5) a deux côtés opposés parallèles à une direction axiale, et la concave (C1, C2, C4, C5) pénètre à travers la surface axiale (A) au niveau de deux extrémités opposées dans la direction axiale ;
une région partielle de la surface circonférentielle fait saillie pour former une saillie (C3), la saillie (C3) s'étend jusqu'à la surface axiale (A) au niveau des deux extrémités opposées dans la direction axiale, la saillie (C3) a deux côtés opposés parallèles à la direction axiale, lesdites concaves sont réparties symétriquement sur deux côtés opposés de la saillie (C3), et lesdites concaves (C1, C2, C4, C5) sont espacées de la saillie (C3).

2. Tôle de noyau de rotor selon la revendication 1, dans laquelle
la tôle de noyau de rotor a un angle d'arc de pôle externe (α2) et un angle d'arc de pôle interne (α1), un côté de l'angle d'arc de pôle externe (α2) passe à travers une extrémité qui est dans une région entre la première ouverture externe (1812m) et une limite de la surface axiale (A) et qui est proche de la seconde ouverture externe (1813m), l'autre côté de l'angle d'arc de pôle externe (α2) passe à travers une extrémité qui est dans une région entre la seconde ouverture externe (1813m) et la limite de la surface axiale (A) et qui est proche de la première ouverture externe (1812m), un côté de l'angle d'arc de pôle interne (α1) passe à travers une extrémité qui est dans une région entre la première ouverture interne (1811m) et la limite de la surface axiale (A) et qui est proche de la seconde ouverture interne (1814m), l'autre côté de l'angle d'arc de pôle interne (α1) passe à travers une extrémité qui est dans une région entre la seconde ouverture interne (1814m) et la limite de la surface axiale (A) et qui est proche de la seconde ouverture interne (1814m), et l'angle d'arc de pôle interne (α1) représente 2 fois à 2,5 fois l'angle d'arc de pôle externe (α2).

3. Tôle de noyau de rotor selon la revendication 1 ou 2, dans laquelle
une extrémité de la première ouverture interne qui est proche ou éloignée de la seconde ouverture interne comprend au moins deux segments d'arc, les au moins deux segments d'arc sont tangents en séquence, et un angle obtus est formé entre des cordes des deux segments d'arc adjacents.

4. Tôle de noyau de rotor selon la revendication 3, dans laquelle
l'extrémité de la première ouverture interne qui est proche de la seconde ouverture interne comprend un premier segment d'arc, un deuxième segment d'arc, un segment de ligne droite, un troisième segment d'arc et un quatrième segment d'arc qui sont reliés en séquence, le deuxième segment d'arc est tangent au segment de ligne droite, et le segment de ligne droite est tangent au troisième segment d'arc.

5. Tôle de noyau de rotor selon la revendication 3, dans laquelle
les au moins deux segments d'arc (R1, R2) ont des rayons différents.

6. Tôle de noyau de rotor selon la revendication 1 ou 2, dans laquelle
une barrière de flux est formée entre deux extrémités qui sont de la première ouverture externe (1812m) et de la seconde ouverture externe (1813m) et qui sont proches l'une de l'autre.

7. Noyau de rotor comprenant une pluralité de tôles de noyau de rotor selon l'une quelconque des revendications 1 à 6, dans lequel toutes les tôles de noyau de rotor sont empilées dans une direction axiale.

8. Rotor comprenant un arbre rotatif, un aimant permanent et le noyau de rotor selon la revendication 7, dans lequel l'aimant permanent est disposé dans chacune de la première fente magnétique externe (1812), de la seconde fente magnétique externe (1813), de la première fente magnétique interne (1811) et de la seconde fente magnétique interne (1814) de chaque tôle de noyau de rotor, l'arbre rotatif passe à travers le noyau de rotor dans une direction axiale du noyau de rotor et est relié de manière fixe au noyau de rotor, et la première fente magnétique externe (1812), la seconde fente magnétique externe (1813), la première fente magnétique interne (1811) et la seconde fente magnétique interne (1814) de chaque tôle de noyau de rotor sont toutes réparties sur la périphérie de l'arbre rotatif.

9. Moteur synchrone à aimant permanent comprenant un stator et le rotor selon la revendication 8, dans lequel le stator est emmanché sur la périphérie du noyau de rotor, un entrefer est laissé entre le stator et le noyau de rotor, et l'arbre rotatif s'étend hors du stator.

10. Groupe motopropulseur comprenant un dispositif de commande de moteur et le moteur synchrone à aimant permanent selon la revendication 9, dans lequel le dispositif de commande de moteur est connecté électriquement au moteur synchrone à aimant permanent.

11. Véhicule électrique comprenant un châssis de véhicule et le groupe motopropulseur selon la revendication 10, dans lequel le groupe motopropulseur est disposé sur le châssis de véhicule.
